# EUROPEAN PATENT APPLICATION

(11) **EP 3 591 373 A1**
(43) Date of publication of application: **08.01.2020**
(21) Application number: 18305897.3
(22) Date of filing: 06.07.2018
(51) Int. Cl.: G01N 1/06, G01N 1/28

(54) **SUPPORT FOR A BIOLOGICAL SAMPLE**

(71) Applicant: Sorbonne Université, 75006 Paris (FR); Centre National de la Recherche Scientifique - CNRS, 75016 Paris (FR); INSTITUT NATIONAL DE LA SANTE ET DE LA RECHERCHE MEDICALE (INSERM), 75013 Paris (FR)
(72) Inventor: CUBI, Roger, 76000 ROUEN (FR); MAZIER, Dominique, 75010 PARIS (FR)
(74) Representative: Regimbeau

(57) **Abstract**

The invention deals with a support (1, 31) comprising a biological sample (2, 32) hydrated with a protective buffer (3, 33), and a first transparent element (4, 34) and a second transparent element (6, 36) able to be stacked to store the biological sample (2, 32) therebetween.

## Description

### TECHNICAL FIELD

The invention deals with a support for a biological sample, a laser capture microdissection device, and a laser capture microdissection method.

### STATE OF THE ART

Laser capture microdissection (LCM) is a method used by biologists that allows to isolate and recover specific cells or tissue regions on complex cell cultures or tissue sections. LCM notably allows isolating specific cells of interest from a biological sample.

There are different methodologies to perform the LCM, these depend on the manufacturer of the LCM device involved (Zeiss, Leica, Arcturus...). The conventional LCM method developed by Zeiss comprises the following steps.

A dehydrated biological sample is deposited on an upper surface of a transparent membrane extending horizontally supported by a frame. The membrane also has a lower surface opposite to the upper surface.

An image acquired by a camera coupled to a microscope and showing the sample deposited on the membrane is displayed on a screen. A user selects a portion of interest of the sample to be isolated for further studies from this image, for instance by drawing an outline of this portion in the image by means of a mouse, a keyboard or a touchscreen.

Once a portion of interest is selected, a cutting laser beam emitted by a laser is directed upwards towards the lower surface of the membrane, such that the cutting laser beams cuts the biological sample deposited on the upper surface of the membrane. The cutting laser beam moves relative to the membrane along a closed trajectory so as to cut the membrane and the biological sample the portion of interest visually selected by the user.

A catapulting laser beam emitted by the laser is then directed upwards towards the lower surface of the region cut by the laser, then catapults the dissected region into a container arranged above the membrane. To achieve this catapulting effect despite gravity, the catapulting laser beam is less focused than the cutting laser beam.

There are different problems related to LCM. One of the problems we encountered is that the sample degrades during the microdissection process. For example, in transcriptomic studies, even with the sample fixed and dehydrated before the microdissection process, the RNA in the sample degrades over time. This limits the time available to perform laser microdissection on the same sample.

Another problem encountered in transcriptomic studies concerns the methods used to identify the cells of interest. The most used technique in the research laboratories to visualize a specific cell is the immunostaining. With the help of antibodies binding to antigens that are present in the cells of interest, we can identify a specific subset of cells. The antibody is detected either directly, through a label that is directly conjugated to the primary antibody, or indirectly, using a labelled secondary antibody that has been raised against the host species and antibody type and subtype of the primary antibody. The antibody is visualized using either a fluorescent label or an enzyme that converts a soluble substrate into an insoluble chromogenic product.

Unfortunately, the use of immunostaining techniques to detect the cells of interest coupled to LCM causes a greater sample's RNA degradation, as a result, the microdissected material is not appropriate for transcriptomic studies. For that reason, in all the studies involving the study of the RNA, the immunostaining technique can't be coupled to LCM in order to identify the cells to microdissect.

### SUMMARY OF THE INVENTION

A goal of the invention is to ensure the protection of the sample during a microdissection.

To this end it is proposed, according to a first aspect of the invention, a support comprising: a biological sample hydrated with a protective buffer, a first transparent element and a second transparent element able to be stacked to store the biological sample therebetween.

Having the biological sample in a protective buffer during the microdissection process provides many advantages: i) the sample does not degrades or degrades less quickly, which means that the user can afford taking more time to select a portion of interest of the biological sample to be cut; ii) it allows the use of other techniques before the LCM like as the immunostaining in order to identify the cells of interest before the LCM.

The support according to the first aspect of the invention may comprise the following optional features, taken alone or in combination.

The protective buffer may comprise a solution selected from the group of citrate buffer, HEPES, saline buffer, phosphate buffer, and Tris Buffer, optionally having a pH comprised between 5 and 9, preferably between 6 and 8, more preferably between 6.5 and 7.5.

The protective buffer may comprise at least one compound preventing the degradation of the constituents of said sample, said compound being preferably inhibitors of a DNAse, inhibitor of a RNAse, inhibitor of a protease, or inhibitor of a phosphatase, inhibitor of protein phosphorylation.

At least one of the two transparent elements may be made of polyethylene terephthalate, polyethylene naphthalate, polyphenylene sulphide, polyester or fluocarbon.

One of the two transparent elements may be made of glass.

The first transparent element may have a planar surface facing the second transparent element, and the support may further comprises a stop for stopping a displacement of the second transparent element relative to the first transparent element in a direction parallel to the planar surface.

The support may comprise a housing defining a chamber for storing the first transparent element and the biological sample, wherein the housing comprises:
- a base part defining an through opening allowing a laser beam coming from the exterior of the housing to enter the chamber,
- a cover part comprising the second transparent element, wherein the cover part is designed to be set in a closing position wherein: the cover part cooperates with the base part to close the chamber and the second transparent element is opposite to the through opening relative to the chamber.

The cover part may comprise a ring defining a through opening covered by the second transparent element, and the base part may define a circular groove for receiving at least in part the ring, wherein the circular groove extends around the through opening of the base part. Alternatively, the cover part may be rectangular and define a through opening covered by the second transparent element, and the base part may comprises a peripheral wall defining a rectangular recess for simultaneously receiving the first transparent element, at least in part the second transparent element, and the biological sample stored between the two transparent elements stacked.

It is proposed, according to a second aspect of the invention, a laser capture microdissection device comprising:
- a support according to the first aspect of the invention,
- a laser source configured to emit a cutting laser beam directed towards the support such that the cutting laser beam cuts at least one of the two transparent elements and the biological sample stored therebetween.

It is proposed, according to a third aspect of the invention, a laser capture microdissection method comprising emitting a cutting laser beam directed towards a support according to the first aspect of the invention such that the cutting laser beams cuts at least one of the two transparent elements and cuts the biological sample stored therebetween.

The method according to the third aspect of the invention may comprise the following optional features, taken alone or in combination.

The laser beam may be directed towards the support so as to pass through the first transparent element before reaching the biological sample then pass through the second transparent element, and the laser may cut the second transparent element and not cut the first transparent element.

The method may further comprise emitting a catapulting laser beam directed towards the support such that the catapulting laser beam passes through the first transparent element, then catapults a portion of interest cut in the biological sample and a portion cut in the second transparent element into a container facing the second transparent element. The method may further comprise
- putting a collecting device comprising an adhesive in contact with a portion cut by the cutting laser beam in one of the two transparent elements such that said portion adheres to the collecting device, and
- moving the collecting device away from the support.

The cutting laser beams may cut both transparent elements, and a container may be placed below the support so as to collect a portion of interest cut in the biological sample, a portion cut in the first transparent element and portion cut in the second transparent element falling by gravity.

### BRIEF DESCRIPTION OF THE DRAWINGS

Further details, features and advantages of the invention are explained in more detail below with the aid of the exemplary embodiments of the invention that are illustrated in the figures in which:
- Figure 1 is an exploded view of a support according to a first embodiment.
- Figures 2 and 3 are two side sectional view of the support according to the first embodiment.
- Figure 4 is an exploded view of a support according to a second embodiment.
- Figures 5 and 6 are two side sectional view of the support according to the second embodiment.

### DETAILED DESCRIPTION OF EMBODIMENTS

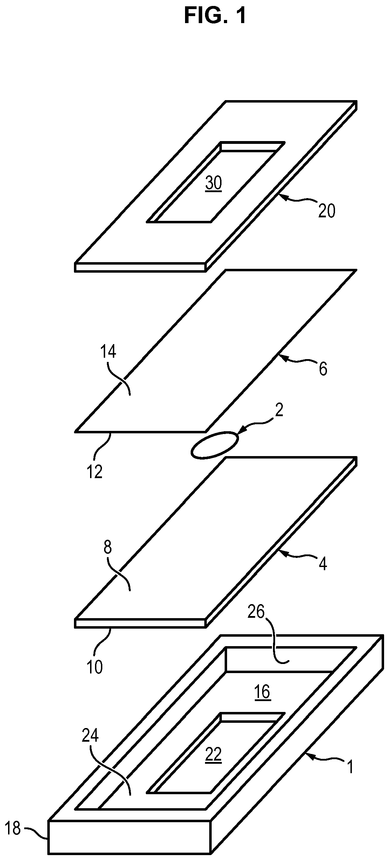

Referring to **figures 1 to 3****,** a support 1 according to a first embodiment comprises a biological sample 2, a first transparent element 4 and a second transparent element 6.

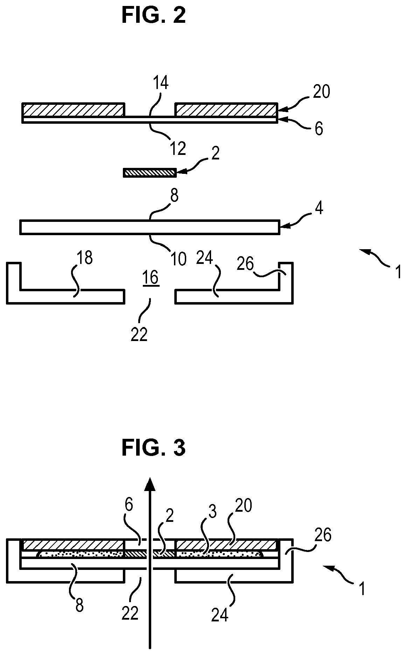

The biological sample 2 is hydrated with a protective buffer 3 (shown in figure 3).

The biological sample 2 is for instance hydrated with a solution selected from the group of citrate buffer, HEPES, saline buffer, phosphate buffer, and Tris Buffer, optionally having a pH comprised between 5 and 9, preferably between 6 and 8, more preferably between 6.5 and 7.5.

The biological sample 2 further comprises at least one compound preventing the degradation of the constituents of said sample 2.

Said compound preferably comprises at least one of the following inhibitors: DNAse inhibitors, RNAse inhibitors, protease inhibitors, phosphatase inhibitors, or protein phosphorylation inhibitors.

The first transparent element 4 is a plate having a first planar surface 8, and a second planar surface 10 opposite to the first planar surface 8. The two planar surfaces 8, 10 are rectangular.

The second transparent element 6 is a membrane having a first planar surface 12, and a second planar surface 14 opposite to the first planar surface 12. The two planar surfaces 12, 14 are rectangular.

The first transparent element 4 may have a higher resistance to laser cutting than that of the second transparent element 6.

The first transparent element 4 is made of glass. It may have a thickness lower than 5 millimetres, preferably lower than 1 millimetres, preferably lower than 0,5 millimetres.

The second transparent element 6 is thinner than the first transparent element 4.

The second transparent element 6 may for instance be a flexible film having a thickness lower than 10 micrometres, preferably lower than 1,4 micrometres.

The second transparent element 6 is made of one of the following materials, referred to as "weak materials" in the following: polyethylene terephthalate (PET), polyethylene naphthalate (PEN), polyphenylene sulphide (PPS), polyester or fluocarbon.

The two transparent elements 4, 6 are able to be stacked to store the biological sample 2 therebetween.

When stored between the two transparent elements 6, 4, the biological sample 2 is in contact with the first planar surface 8 of the first transparent element 4 and is in contact with the first planar surface 12 of the second transparent element 6. Both first planar surfaces 8, 12 are parallel to one another.

The support 1 further comprises a housing defining a chamber 16 for storing the first transparent element 4 and the biological sample 2.

The housing comprises a base part 18 and a cover part 20.

The base part 18 defines a through opening 22 allowing a laser beam coming from the exterior of the housing to enter the chamber 16.

The base part 18 comprises a bottom wall 24 wherein the through opening 22 is defined. The bottom wall 24 defines a bottom of the chamber 16.

Besides, the base part 18 comprises a peripheral wall 26 protruding from the bottom wall 24 and arranged to form a rectangular frame surrounding the chamber 16.

The first transparent element 4 is able to be placed in the chamber 16, such that its second planar surface rests on the bottom wall 24 and be surrounded by the peripheral wall 26.

The base part 18 can be made of any material. It is for instance made of metal or plastics.

Besides, the cover part 20 of the housing comprises a top wall 28. The top wall 28 is rectangular.

The top wall 28 defines an aperture 30. The aperture 30 is a rectangular window.

The top wall 28 can be made of any material. It is for instance made of metal or plastics.

The second transparent element 6 is included in the cover part 20. The second transparent element 6 is affixed to the top wall 28 and extends over the aperture 30 defined in the top wall 28, so as to defined a slight recess. The second transparent element 6 is for instance affixed to the top wall 28 by means of an adhesive.

The chamber 16 can be closed by placing the top wall 28 in the chamber 16 of the base part 18, such that the peripheral wall 26 surrounds the top wall 28.

In this position, referred to as "closing position" hereinafter, the second transparent element 6 is opposite to the through opening 22 relative to the chamber 16.

It is to be noted that the four side walls are high enough to store in the chamber 16 the first transparent element 4 in its entirety, and at least partially the cover part 20.

The peripheral wall 26 actually forms stop for stopping a displacement of the second transparent element 6 relative to the first transparent element 4 in a direction parallel to the first planar surfaces 8, 12.

The different parts of the support 1 can be assembled with the biological sample 2 as follows.

First, the cover part 20 is turned upside down such that the first planar surface 12 is oriented upwards.

The biological sample 2, which is for instance a tissue slice. Once the biological sample 2 is cut, it is put in contact with the first planar surface 12 of the transparent element 6. The biological sample 2 adheres to the first planar surface 12 by capillarity.

The biological sample 2 comprises cells which may be cultivated on the second planar surface 14 for several days, before putting said sample 2 onto the opposite planar surface 12. A culture medium is put in the recess formed by the aperture 30 covered by the second transparent element 6 so as to allow the cells to grow.

Once the biological sample 2 adheres to the first planar surface 12, the protecting buffer 3 is put in contact with the biological sample 2 so as to hydrate it.

Then the first transparent element 4 is stacked with the second transparent element 6 so as to store the sample 2 and the protective buffer 3 therebetween. More precisely, the biological sample 2 and the protecting buffer 3 are put in contact with the first planar surface 8 of the first transparent element 4.

Preferably, the second transparent element 6 is located between the top wall 28 of the cover 20 and the biological sample 2. Thus, the biological sample 2 is prevented to enter the slight recess formed by aperture 30. This allow to ensure that the biological sample 2 and the protective buffer 3 form a thin layer once sandwiched between the two transparent elements 4 and 6. If the biological sample 2 could enter the recess formed by aperture 30, the protective buffer 3 would be thicker. Micro dissecting the sample 2 hydrated with such thick layer of buffer 3 would be less efficient.

The cover part 20, the first transparent element 4 and the biological sample 2 and the protective buffer 3 stored therebetween are inserted in the chamber 16. In other words, the cover part 20 is set in its closing position.

The support 1 is now assembled and can be turned upside down again into the position depicted in figure 3.

Thanks to the peripheral wall 26 of the housing, the biological sample 2 is prevented from exiting the chamber 16.

The support 1 can be included in a laser capture microdissection (LCM) device further (not shown in the figures) comprising a laser, a container, and means for observing the biological sample 2 stored in the support 1 between the two transparent elements 4, 6.

A laser capture microdissection (LCM) method using the support 1 comprises the following steps.

The support is oriented such that the second transparent element 6 is on top of the first transparent element 4 (as shown in figure 3).

The laser emits a cutting laser beam directed towards the support 1 such that the cutting laser beam cuts at least one of the two transparent elements 4, 6 and further cuts the biological sample 2 stored therebetween.

The cutting laser beam propagates along a path indicated by an arrow in figure 3.

The laser is arranged such that the cutting beam first passes through the through opening 22 defined in the bottom wall 24 so as to enter the chamber 16. The cutting beam then passes through the first transparent element 4 and the biological sample 2 both stored in the chamber 16. The cutting beam then passes through the second transparent element 6 to exit the support 1.

The second transparent element 6 (made in a weak material) is actually cut by the cutting laser beam. The biological sample 2 is cut as well by the cutting laser. However, the first transparent element 4, which is more resistant to laser cutting, is not cut by the cutting laser beam.

The laser beam is moved so as to cut a portion of interest of the biological sample 2. A portion of the second transparent element 6 having the same shape is cut as well in this step.

The laser is then controlled to emit a catapulting laser beam directed towards the support such that the catapulting laser beam passes through the first transparent element 4, then catapults the portion of interest cut in the biological sample 2 and the portion cut in the second transparent element 6 into a container facing the second transparent element 6. A man skilled in the art knows how to control a laser so as to obtain such catapulting effect. Such control is typically carried out by means of a software of the LCM device.

The catapulting laser beam propagates along the same path as the cutting laser beam.

In this embodiment, the contained is on top of the support 1. The catapulting beam is able to catapult the sample 2 in this contained despite gravity.

In an LCM method according to a second embodiment, the portion of interest of the biological sample 2 is collected differently. The laser does not emit a catapulting beam. Instead, a collector device comprising an adhesive, for instance a manual instrument held by a user, is put in contact with the second planar surface 14 of the second transparent element 6, such that the second transparent element 6 adheres to the collector device.

The collector device is then moved away from the support 1. In this movement, the collector drives the portion of the second transparent element 6 cut by the laser, as well as the portion of interest cut in the biological sample 2 (which still adheres to the first planar surface 10 by capillarity) away from the support.

If both transparent elements 4, 6 of the support 1 or 31 are made of a weak material, an LCM method according to a third embodiment can be carried out. In this third method, the laser cutting beam cuts both transparent elements 4, 6 and the biological sample 2 stored therebetween. A portion cut in the first transparent element 4, a portion cut in the second transparent element 6 and a portion of interest cut in the biological sample 2 stored therebetween can fall together by gravity into a container put below the support 31. In this third method, no catapulting beam is emitted by the laser.

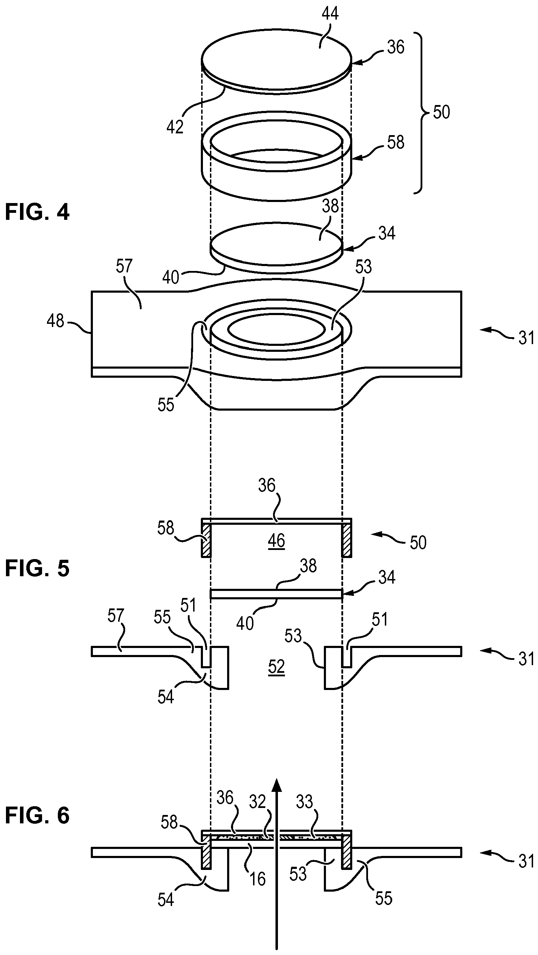

Is shown in **figures 4 to 6** a support 31 according to second embodiment. This support 31 comprises a biological sample 32 hydrated with a protective buffer 33, a first transparent element 34 and a second transparent element 36.

The biological sample 32 is identical to the biological sample 2 described above.

The protective buffer 33 is identical to the protective buffer 3 described above.

The first transparent element 34 is a disk having a first planar surface 38, and a second planar surface 40 opposite to the first planar surface 38. The two planar surfaces 38, 40 are circular.

The second transparent element 36 is a membrane having a first planar surface 42, and a second planar 44 surface opposite to the first planar surface 42. The two planar surfaces 42, 44 are circular.

The first transparent element 34 may have a higher resistance to laser cutting than that of the second transparent element 36.

The first transparent element 34 is made of glass. It may have a thickness lower than 5 millimetres, preferably lower than 1 millimetres, preferably lower than 0,5 millimetres.

The second transparent element 36 is thinner than the first transparent element 34.

The second transparent element 36 may for instance be a flexible film having a thickness lower than 10 micrometres, preferably lower than 1,4 micrometres.

The second transparent element 36 is made of one of the "weak materials" described above.

Alternatively, both transparent elements 4, 6 of the support 31 are made of a weak material.

The two transparent elements 36, 34 are able to be stacked to store the biological sample 32 therebetween.

When stored between the two transparent elements 36, 34, the biological sample 32 is in contact with the first planar surface 38 of the first transparent element 34 and is in contact with the first planar surface 42 of the second transparent element 36. Both first planar surfaces 38, 42 are parallel to one another.

The support 31 further comprises a housing defining a chamber 46 for storing the first transparent element 34, the biological sample 32 and the protective buffer 33.

The housing comprises a base part 48 and a cover part 50.

The base part 48 defines a through opening 52 allowing a laser beam coming from the exterior of the housing to enter the chamber 46.

The base part 48 further defines a circular groove 51 extending around the through opening 52.

More precisely, the base part 48 comprises an inner circular wall 53 defining the through opening 52 and an outer circular wall 55 extending around the inner circular wall 53. The circular groove 51 in defined between the inner circular wall 53 and the outer circular wall 55.

The base part 48 further comprises a bottom wall 54 joining the inner circular wall 53 to the outer circular wall 55. The bottom wall 54 defines a bottom of the circular groove 51.

The base part 48 further comprises two grasping wings 57. The circular groove 51 extends between the two grasping wings 57.

The base part 48 can be made of any material. It is for instance made of metal or plastics.

The first transparent element 34 is sized so as to rest on the inner circular wall 53 of the base part 48 only. In other words, the diameter of the first transparent element 34 is comprised between the outer diameter of the inner circular wall 53 and the inner diameter of the inner circular wall 53.

The cover part 50 comprises a ring 58 defining a through opening. This ring 58 is covered by the second transparent element 36 so as to close this through opening.

The ring 58 can be made of any material. It is for instance made of metal or plastics.

The second transparent element 36 is included in the cover part 50. The second transparent element 36 is affixed to the top wall 54 and extends over the through opening 52 defined in the ring 58.

The chamber 46 is actually formed in the through opening 52 of the ring 58.

The first transparent element 34 can be inserted in the ring 58 such that the first planar surface 38 of the first transparent element 34 and the first planar surface 42 of the second transparent element face each other.

The ring 58 is designed to be received in the circular groove 51.

The chamber 46 can be closed by inserting the ring 58 in the circular groove 51 of the base part 48.

When the ring 58 is received in the circular groove 51, the cover part 50 is in its closing position. In this closing position the second transparent element 36 is opposite to the through opening 52 relative to the chamber 46.

In this second embodiment the circular walls 53, 55 act as stops for stopping a displacement of the second transparent element 36 relative to the first transparent element 34 in a direction parallel to the first planar surfaces 38, 44.

The support 31 mainly differs from the support 1 by the shape of its transparent elements 34, 36 and by the way the two parts of the housing cooperate.

The different parts of the support 31 can be assembled as follows.

First, the cover part 50 is turned upside down.

The biological sample 32 is inserted in the chamber 46 defined in the ring 58 so as to rest on the first surface 42 of the second transparent element 36 affixed to the ring 58.

The protective buffer 33 is inserted as well in the chamber 46 defined in the ring 58 so as to hydrate the biological sample 32.

The biological sample 32 may comprise cells which may be cultivated on surface 42 for several days before being micro-dissected. The well formed by the cover part 50 can be used to the cells and a culture medium so as to allow the cells to grow. Before conducting the microdissection, the cell medium is removed and a small volume of the protecting buffer 33 is added to the sample 32.

For cells cultivated in suspension outside support 31, the biological sample 32 is obtained by centrifuging cells that grew in a culture medium. The biological sample 32 is put in the protective buffer 33. The protective buffer 33 containing the biological sample 32 is then poured in the chamber 46.

Then, the first transparent element 34 is inserted as well in the ring 58, such that the biological sample 32 with the protective buffer 33 is stored therebetween and contacts with both transparent elements 34, 36.

The base part 48 is turned upside down as well and the cover part 50 is set in its closing position by inserting the ring 58 into the circular groove 51. During this insertion the second planar surface 40 contacts with the inner circular wall 53 of the base part.

The support 31 is now assembled and can be turned upside down again into the position depicted in figure 6.

Of course, all LCM method described above in relation with the support 1 can also be carried out by means of the support 31.

## Claims

1. Support (1, 31) comprising:
• a biological sample (2, 32) hydrated with a protective buffer (3, 33),
• a first transparent element (4, 34) and a second transparent element (6, 36) able to be stacked to store the biological sample (2, 32) therebetween.

2. Support (1, 31) according to the preceding claim, wherein the protective buffer (3, 33) comprises a solution selected from the group of citrate buffer, HEPES, saline buffer, phosphate buffer, and Tris Buffer, optionally having a pH comprised between 5 and 9, preferably between 6 and 8, more preferably between 6.5 and 7.5.

3. Support (1, 31) according to any one of the preceding claims, wherein the protective buffer (3, 33) comprises at least one compound preventing the degradation of the constituents of said sample (2, 32), said compound being preferably inhibitors of a DNAse, inhibitor of a RNAse, inhibitor of a protease, or inhibitor of a phosphatase, inhibitor of protein phosphorylation.

4. Support (1, 31) according to any one of the preceding claims, wherein at least one of the two transparent elements (4, 6, 34, 36) is made of polyethylene terephthalate (PET), polyethylene naphthalate (PEN), polyphenylene sulphide (PPS), polyester or fluocarbon.

5. Support (1, 31) according to any one of the preceding claims, wherein one of the two transparent elements (4, 6, 34, 36) is made of glass.

6. Support (1, 31) according to any one of the preceding claims, wherein the first transparent element (4, 34) has a planar surface facing the second transparent element (6, 36), and wherein the support (1, 31) further comprises a stop for stopping a displacement of the second transparent element (6, 36) relative to the first transparent element (4, 34) in a direction parallel to the planar surface.

7. Support (1, 31) according to any one of the preceding claims, comprising a housing defining a chamber (16, 46) for storing the first transparent element (4, 34) and the biological sample (2, 32), wherein the housing comprises:
• a base part (18, 48) defining an through opening (22, 52) allowing a laser beam coming from the exterior of the housing to enter the chamber (16, 46),
• a cover part (20, 50) comprising the second transparent element (6, 36), wherein the cover part (20, 50) is designed to be set in a closing position wherein: the cover part (20, 50) cooperates with the base part to close the chamber (16, 46) and the second transparent element (6, 36) is opposite to the through opening relative to the chamber (16, 46).

8. Support (1, 31) according to claim 7, wherein the cover part (50) comprises a ring (58) defining a through opening (22, 52) covered by the second transparent element (6, 36), and wherein the base part (48) defines a circular groove (51) for receiving at least in part the ring (58), wherein the circular groove (51) extends around the through opening (22, 52) of the base part (18, 48).

9. Support (1, 31) according to claim 7, wherein the cover part (18) is rectangular and defines a through opening (22, 52) covered by the second transparent element (6, 36), and wherein the base part (18, 48) comprises a peripheral wall (26) defining a rectangular recess for simultaneously receiving the first transparent element (4, 34), at least in part the second transparent element (6, 36), and the biological sample (2) stored between the two transparent elements (4, 6, 34, 36) stacked.

10. Laser capture microdissection device comprising :
• a support (1, 31) according to any one of the preceding claims,
• a laser source configured to emit a cutting laser beam directed towards the support (1, 31) such that the cutting laser beam cuts at least one of the two transparent elements (4, 6, 34, 36) and the biological sample (2, 32) stored therebetween.

11. Laser capture microdissection method comprising emitting a cutting laser beam directed towards the support (1, 31) according to any of claims 1 to 9 such that the cutting laser beams cuts at least one of the two transparent elements (4, 6, 34, 36) and cuts the biological sample (2, 32) stored therebetween.

12. Laser capture microdissection method according to the preceding claim, wherein the laser beam is directed towards the support (1, 31) so as to pass through the first transparent element (4, 34) before reaching the biological sample (2, 32) then pass through the second transparent element (6, 36), and wherein the laser cuts the second transparent element (6, 36) but does not cut the first transparent element (4, 34).

13. Laser capture microdissection method according to claim 12, further comprising emitting a catapulting laser beam directed towards the support (1, 31) such that the catapulting laser beam passes through the first transparent element (4, 34), then catapults a portion of interest cut in the biological sample (2, 32) and a portion cut in the second transparent element (6, 36) into a container facing the second transparent element (6, 36).

14. Laser capture microdissection method according to claim 12, further comprising:
• putting a collecting device comprising an adhesive in contact with a portion cut by the cutting laser beam in one of the two transparent elements (4, 6, 34, 36) such that said portion adheres to the collecting device, and
• moving the collecting device away from the support (1, 31).

15. Laser capture microdissection method according to claim 11, wherein the cutting laser beams cuts both transparent elements (4, 6, 34, 36), and wherein a container is placed below the support (1, 31) so as to collect a portion of interest cut in the biological sample (2, 32), a portion cut in the first transparent element (4, 34) and portion cut in the second transparent element (6, 36) falling by gravity.
